# EUROPÄISCHE PATENTSCHRIFT

(11) **EP 2 977 563 B1**
(45) Veröffentlichungstag und Bekanntmachung des Hinweises auf die Patenterteilung: **30.01.2019**
(21) Anmeldenummer: 15002180.6
(22) Anmeldetag: 23.07.2015
(51) Int. Cl.: F01D 11/04, F04D 29/12, F04D 29/58, F16J 15/34, F01D 25/10

(54) **STRÖMUNGSMASCHINE MIT TROCKENGASDICHTUNG**
TURBOMACHINE HAVING A DRY GAS SEAL
TURBOMACHINE AVEC JOINT À GAZ SEC

(30) Priorität: 26.07.2014 DE 102014011042
(43) Veröffentlichungstag der Anmeldung: 27.01.2016
(73) Patentinhaber: MAN Energy Solutions SE, 86153 Augsburg (DE)
(72) Erfinder: Mischo, Bob Christian, 8050 Zürich (CH); Mokulys, Thomas, 46509 Xanten (DE); Scholtysik, Martin, 5600 Lenzburg (CH); Birrer, Reto, 6038 Gisikon (CH); Klaas, Annika, 8047 Zürich (CH)

(56) Entgegenhaltungen:
- EP-A1- 0 781 948
- EP-A2- 2 463 526
- US-A1- 2004 026 871

## Beschreibung

Die Erfindung betrifft eine Strömungsmaschine gemäß dem Oberbergriff des Anspruchs 1.

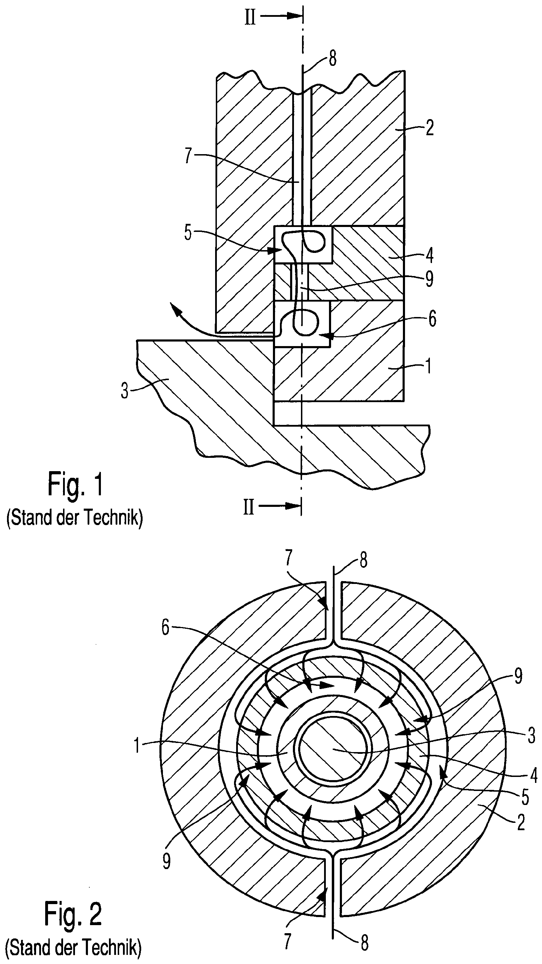

Der Aufbau von zum Beispiel als Turbokompressoren ausgebildeten Strömungsmaschinen ist dem hier angesprochenen Fachmann bekannt. So zeigen Fig. 1 und 2 unterschiedliche Querschnitte durch eine Strömungsmaschine nach dem Stand der Technik im Bereich einer Trockengasdichtung 1, die zwischen einem Gehäuse 2 und einem Rotor 3 der Strömungsmaschine positioniert ist. Nach dem Stand der Technik ist zwischen der Trockengasdichtung 1 und dem Gehäuse 2 eine ringartige, statorseitige Baugruppe 4 angeordnet, wobei einerseits zwischen dieser Baugruppe 4 und dem Gehäuse 2 und andererseits zwischen dieser Baugruppe 4 und der Trockengasdichtung 1 jeweils ein Gasraum 5 bzw. 6 ausgebildet ist. Über mindestens eine in das Gehäuse 2 eingebrachte Bohrung 7 kann im Sinne des Pfeils 8 Gas, welches zur Temperierung der Trockengasdichtung 1 benötigt wird, zunächst in den zwischen dem Gehäuse 2 und der Baugruppe 4 positionierten Gasraum 5 eingeleitet werden, um das zur Temperierung der Trockengasdichtung 1 benötigte Gas anschließend über in die Baugruppe 4 eingebrachte Bohrungen 9 in den zwischen der Baugruppe 4 und der Trockengasdichtung 1 ausgebildeten Gasraum 6 einzuleiten. Das über die Bohrungen 7 des Gehäuses geleitete Gas wird demnach mittelbar über die Baugruppe 4 dem Gasraum 6 zugeführt.

Eine solche Anordnung geht z.B. aus der EP 0 781 948 A1 hervor. Weiterer relevanter Stand der Technik ist in der US 2004/026871 A1 und in der EP 2 463 526 A2 zu finden.

Bei aus dem Stand der Technik bekannten Strömungsmaschinen wird zur Temperierung der Trockengasdichtung 1, nämlich zum Erhitzen derselben auf Betriebstemperatur, relativ viel Gas und eine relativ lange Aufheizzeit benötigt. Dies ist von Nachteil.

Es besteht daher Bedarf daran, die zum Aufheizen der Trockengasdichtung benötigte Gasmenge sowie Zeit zu reduzieren und eine entsprechende Strömungsmaschine bereitzustellen, bei denen die zügige Temperierung der Trockengasdichtung bewerkstelligt werden kann. Hiervon ausgehend liegt der vorliegenden Erfindung die Aufgabe zugrunde, eine Strömungsmaschine zu schaffen, bei welcher die Trockengasdichtung effektiver temperiert werden kann.

Diese Aufgabe wird durch eine Strömungsmaschine nach Anspruch 1 gelöst. Hiernach ist das gasförmige Medium über die oder jede Ausnehmung bzw. Bohrung mittels einer Führungsröhre unmittelbar in einen zwischen dem Gehäuse und der Trockengasdichtung ausgebildeten Gasraum leitbar. Thermische Energie, die nach dem Stand der Technik beim Aufheizen der zwischen der Trockengasdichtung und dem Gehäuse positionierten Baugruppe verloren geht, kann bei der Erfindung direkt zum Aufheizen der Trockengasdichtung genutzt werden. Hierdurch verringert sich die zum Aufheizen der Trockengasdichtung benötigte Gasmenge sowie die hierfür erforderliche Zeit. Insbesondere nimmt die Führungsröhre weniger thermische Energie als das Gehäuse auf.

Nach einer vorteilhaften Weiterbildung der Erfindung verläuft die oder jede Bohrung unter einem Winkel abweichend von 90° zur Umfangsrichtung einer gehäuseseitigen Begrenzungswand des Gasraums. Vorzugsweise schließt die jeweilige Bohrung mit der Umfangsrichtung der Begrenzungswand des Gasraums im Bereich der Bohrung einem Winkel kleiner als 80° ein. Hierdurch wird das zum Aufheizen bzw. Temperieren der Trockengasdichtung genutzte Gas unter Ausbildung eines Dralls in den zwischen dem Gehäuse und der Trockengasdichtung ausgebildeten Gasraum geleitet. Dies sorgt für eine gleichmäßige Verteilung des Gases im Gasraum und damit für eine effektive Erhitzung der Trockengasdichtung innerhalb kurzer Zeit bei geringer benötigter Gasmenge.

Nach einer vorteilhaften Weiterbildung der Erfindung ist zwischen der jeweiligen Führungsröhre und einer Wand der die Führungsröhre aufnehmenden Bohrung ein Freiraum ausgebildet ist. Vorzugsweise ist der Freiraum über eine in das Gehäuse eingebrachte Bohrung mit dem Gasraum oder über eine in die Führungsröhre eingebrachte Bohrung mit einem Innenraum der Führungsröhre gekoppelt. Der Freiraum zwischen der Führungsröhre und dem Gehäuse stellt eine thermische Isolierung für die Führungsröhre bereit, wodurch die Aufheizung der Trockengasdichtung noch effektiver gestaltet werden kann.

Nach einer weiteren vorteilhaften Weiterbildung der Erfindung ragt die jeweilige Führungsröhre gegenüber einer gehäuseseitigen Begrenzungswand des Gasraums in den Gasraum hinein und ein in den Gasraum hineinragender Abschnitt der jeweiligen Führungsröhre ist in Umfangrichtung umgebogen und/oder nimmt eine Düse auf. Hierdurch kann das zum Temperieren bzw. Erhitzen der Trockengasdichtung verwendete Gas besonders vorteilhaft in den zwischen dem Gehäuse und der Trockengasdichtung ausgebildeten Gasraum eingeführt werden, wodurch die Effektivität beim Aufheizen der Trockengasdichtung weiter gesteigert werden kann.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen schematisieren Axialschnitt durch eine Strömungsmaschine nach dem Stand der Technik im Bereich einer Trockengasdichtung;
- Fig. 2:: den Schnitt II-II der Fig. 1;
- Fig. 3:: einen schematisieren Axialschnitt durch eine nicht beanspruchte Strömungsmaschine im Bereich einer Trockengasdichtung;
- Fig. 4:: den Schnitt IV-IV der Fig. 3;
- Fig. 5:: einen schematisieren Axialschnitt durch eine erfindungsgemäße Strömungsmaschine im Bereich einer Trockengasdichtung; und
- Fig. 6:: einen schematisieren Axialschnitt durch eine weitere erfindungsgemäße Strömungsmaschine im Bereich einer Trockengasdichtung.

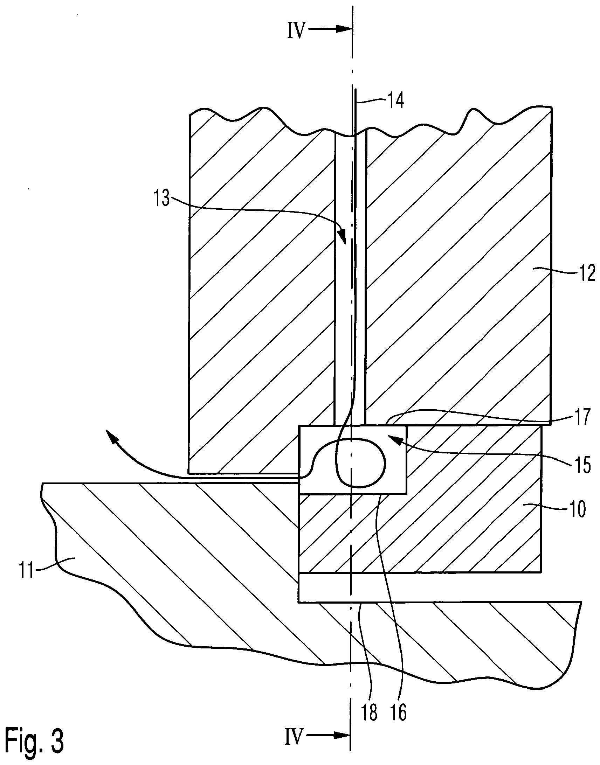

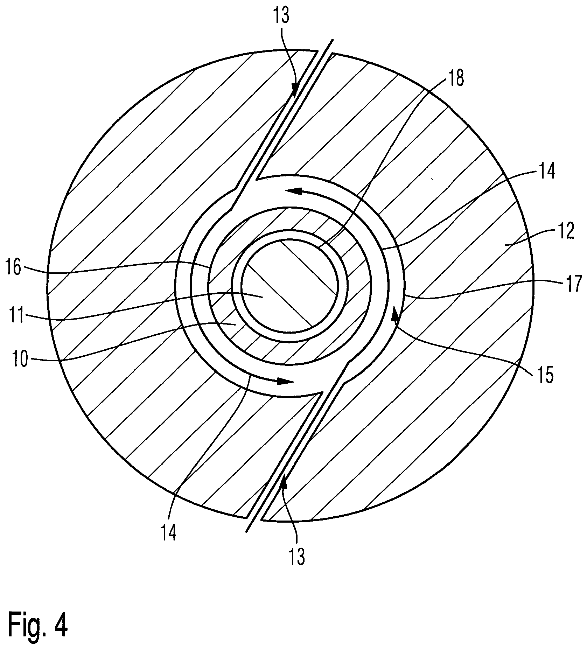

Fig. 3 und 4 zeigen einen Querschnitt durch eine nicht beanspruchte Strömungsmaschine im Bereich einer Trockengasdichtung 10, die zwischen einem Rotor 11 und einem Gehäuse 12 der Strömungsmaschine positioniert ist. Einige Aspekte von erfindungsgemäßen Weiterbildungen gehen jedoch aus den Fig. 3 und 4 hervor.

Über mindestens eine in das Gehäuse 12 eingebrachte Ausnehmung bzw. Bohrung 13 kann im Sinne des Pfeils 14 über das Gehäuse 12 Gas, welches zur Temperierung bzw. Erhitzung der Trockengasdichtung 10 benötigt wird, in Richtung auf die Trockengasdichtung 10 geleitet werden.

Hier wird das nach dem Stand der Technik zwischen der Trockengasdichtung und dem Gehäuse positionierte Bauteil, welches einerseits zwischen dem Bauteil und dem Gehäuse und andererseits zwischen dem Bauteil und der Trockengasdichtung jeweils einen Gasraum definiert, eliminiert, sodass demnach über die oder jede Bohrung 13 des Gehäuses 12 das Gas unmittelbar bzw. direkt in einen zwischen dem Gehäuse 12 und der Trockengasdichtung 10 ausgebildeten Gasraum 15 eingeleitet werden kann. Hierduch geht keine thermische Energie zum Aufheizen einer zwischen der Trockengasdichtung 10 und dem Gehäuse 12 positionierten Baugruppe verloren.

Gemäß Fig. 3, 4 wird der Gasraum 15, der zwischen dem Gehäuse 12 und der Trockengasdichtung 10 ausgebildet ist, radial innen von einer Wandung 16 der Trockengasdichtung 10 und radial außen von einer Wandung 17 des Gehäuses 12 begrenzt. Die oder jede Bohrung 13, über die das zur Temperierung der Trockengasdichtung 10 verwendete Gas in den Gasraum 15 leitbar ist, verläuft dabei unter einem Winkel abweichend von 90° zur Umfangsrichtung der gehäuseseitigen Begrenzungswand 17 des Gasraums 15 im Bereich der jeweiligen Bohrung 13. Vorzugsweise schließt die jeweilige Bohrung 13, nämlich eine Längsmittelachse derselben, mit der Umfangsrichtung der Begrenzungswand 17 im Mündungsbereich der Bohrung 13 in den Gasraum 15 einen Winkel kleiner als 80° ein, vorzugsweise einen Winkel größer als 20° und kleiner als 80°, besonders bevorzugt einen Winkel größer als 30° und kleiner als 70°. Hiermit ist es möglich, das Gas mit einem definierten Drall in den Gasraum 15 einzuleiten, und so eine gute Verteilung des zur Temperierung der Trockengasdichtung 10 verwendeten Gases im Gasraum 15 bereitzustellen.

Nach einer besonders vorteilhaften Variante der Erfindung verläuft die Längsmittelachse der jeweiligen Bohrung 13 des Gehäuses 12, die der Zuführung des zur Temperierung der Trockengasdichtung 10 verwendeten Gases genutzt wird, tangential zu einer den Gasraum 15 radial innen begrenzenden Wandung 16 der Trockengasdichtung 10 oder tangential zu einer Wandung 18 des Rotors 11.

Im in Fig. 3 und 4 gezeigten nicht erfindungsgemäßen Beispiel werden die Bohrungen 13, die in das Gehäuse 12 eingebracht sind, direkt zur Führung des zur Temperierung der Trockengasdichtung 10 eingesetzten Gases genutzt.

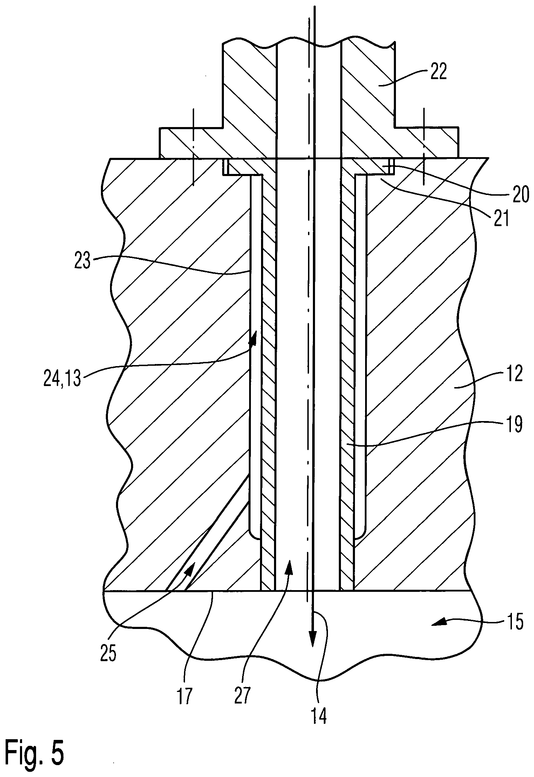

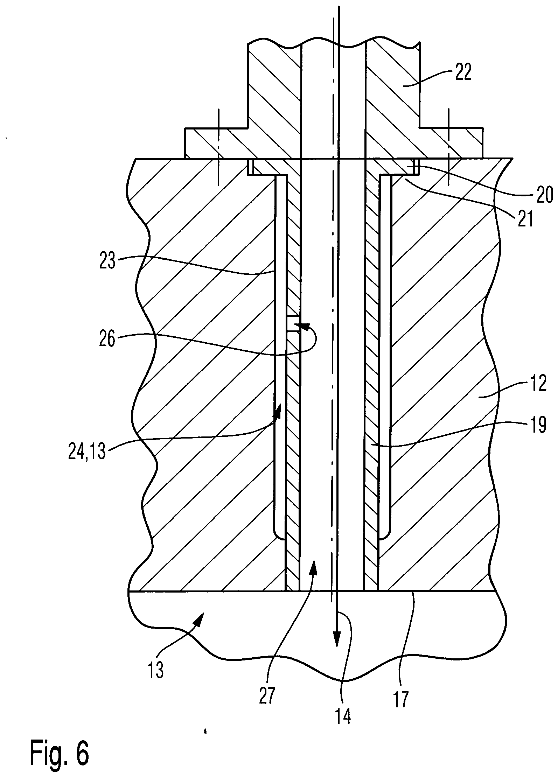

Erfindungsgemäß wird vorgeschlagen, wie in Fig. 5 und 6 gezeigt ist, das die oder jede Bohrung 13 des Gehäuses 12 jeweils eine Führungsröhre 19 für das zur Temperierung der Trockengasdichtung 10 genutzte Gas aufnimmt, um so die jeweilige Bohrung 13 indirekt zur Gasführung zu nutzen, nämlich über eine in der jeweiligen Bohrung 13 positionierte Führungsröhre 19.

An einem vom Gasraum 15 abgewandten Ende weist die jeweilige Führungsröhre 19 dabei einen kragenartigen Vorsprung 20 auf, der an einem entsprechenden Absatz bzw. Anschlag 21 des Gehäuses 12 zur Anlage kommt und der Positionierung der Führungsröhre 19 in der jeweiligen Bohrung 13 dient.

An dieses Ende der Führungsröhre 19 schließt sich gemäß Fig. 5, 6 eine Gasleitung 22 an, die der Zuführung des zur Temperierung der Trockengasdichtung 10 verwendeten Gases in Richtung auf die jeweilige Bohrung 13 bzw. die in der jeweiligen Bohrung 13 positionierte Führungsröhre 19 dient.

Gemäß Fig. 5, 6 ist die jeweilige Führungsröhre 19 in der jeweiligen Bohrung 13 derart positioniert, dass zwischen der jeweiligen Führungsröhre 19 und einer Wand 23, welche die Führungsröhre 19 aufnehmende Bohrung 13 begrenzt, in Axialrichtung der Führungsröhre 19 gesehen zumindest abschnittsweise ein Freiraum 24 ausgebildet ist, welcher die Führungsröhre 19 gegenüber dem Gehäuse 12 isoliert. Hiermit kann verhindert werden, dass durch die Führungsröhre 19 geleitetes Gas das Gehäuse 12 über die Führungsröhre indirekt erhitzt, sodass demnach ein hierdurch bedingter Energieverlust minimiert werden kann.

Im Ausführungsbeispiel der Fig. 5 ist dieser Freiraum 24 zwischen der Führungsröhre 19 und der Wand 23 der Bohrung 13 über eine in das Gehäuse 12 eingebrachte Bohrung 25 mit dem Gasraum 15 gekoppelt. Hierdurch kann ein Druckausgleich im Freiraum 24 gewährleistet werden.

Im Unterschied hierzu zeigt Fig. 6 eine Ausgestaltung, in welcher in die Führungsröhre 19 eine Bohrung 26 eingebracht ist, über welche der Freiraum 24 mit einem Innenraum 27 der Führungsröhre 19, welcher der Gasführung dient, gekoppelt ist.

In den in Fig. 5 und 6 gezeigten Ausführungsbeispielen schließt die jeweilige Führungsröhre 19 bündig mit der gehäuseseitigen Begrenzungswand 17 des Gasraums 15 ab. Demgegenüber ist es auch möglich, dass die Führungsröhre 19 gegenüber der Begrenzungswand 17 in den Gasraum 15 vorsteht, wobei dann der in den Gasraum 15 vorstehende Abschnitt der jeweiligen Führungsröhre 19 vorzugsweise in Umfangsrichtung umgebogen ist. Hiermit kann die Gasführung bzw. Gaseinleitung des Gases in den Gasraum 15 weiter verbessert werden.

Der bündig mit der Wandung 17 abschließende Abschnitt oder gegenüber der Wandung 17 in den Gasraum 15 hineinragende Abschnitt der jeweiligen Führungsröhre 19 kann eine Düse aufnehmen, über die das Gas letztendlich in den Gasraum 15 einleitbar ist.

Die erfindungsgemäßen Merkmale dienen der Verringerung der zum Temperieren bzw. Aufheizen der Trockengasdichtung 10 benötigten Gasmenge und Zeit. Die Erfindung kommt vorzugsweise an Turbokompressoren zum Einsatz.

### Bezugszeichenliste

- 1: Trockengasdichtung
- 2: Gehäuse
- 3: Rotor
- 4: Bauteil
- 5: Gasraum
- 6: Gasraum
- 7: Bohrung
- 8: Gasströmung
- 9: Bohrung
- 10: Trockengasdichtung
- 11: Rotor
- 12: Gehäuse
- 13: Bohrung
- 14: Gasströmung
- 15: Gasraum
- 16: Wandung
- 17: Wandung
- 18: Wandung
- 19: Führungsröhre
- 20: Kragen
- 21: Anschlag
- 22: Gasrohr
- 23: Wandung
- 24: Freiraum
- 25: Bohrung
- 26: Bohrung
- 27: Innenraum

## Patentansprüche

1. Strömungsmaschine, insbesondere Turbokompressor, mit einem Gehäuse (12), mit einem im Gehäuse (12) gelagerten Rotor (11), und mit einer Trockengasdichtung (10) zur Abdichtung des Rotors (11) gegenüber dem Gehäuse (12), wobei in das Gehäuse (12) mindestens eine Ausnehmung bzw. Bohrung (13) für ein gasförmiges Medium eingebracht ist, über welche das gasförmige Medium zur Temperierung der Trockengasdichtung (10) in Richtung auf dieselbe leitbar ist, wobei das gasförmige Medium über die oder jede Ausnehmung bzw. Bohrung (13) unmittelbar in einen zwischen dem Gehäuse (12) und der Trockengasdichtung (10) ausgebildeten Gasraum (15) leitbar ist, **dadurch gekennzeichnet, dass** die oder jede Ausnehmung bzw. Bohrung (13) eine Führungsröhre (19) für das gasförmige Medium aufnimmt und zwischen der jeweiligen Führungsröhre (19) und einer Wand (23) der die Führungsröhre (19) aufnehmenden Bohrung (13) ein Freiraum (24) ausgebildet ist, der über eine in das Gehäuse (12) eingebrachte Bohrung (25) mit dem Gasraum (15) gekoppelt ist.

2. Strömungsmaschine nach Anspruch 1, **dadurch gekennzeichnet, dass** die oder jede Bohrung (13) unter einem Winkel abweichend von 90° zur Umfangsrichtung einer gehäuseseitigen Begrenzungswand (17) des Gasraums (15) im Bereich der jeweiligen Bohrung (13) verläuft.

3. Strömungsmaschine nach Anspruch 2, **dadurch gekennzeichnet, dass** die jeweilige Bohrung (13) mit der Umfangsrichtung der Begrenzungswand (17) des Gasraums (15) im Bereich der jeweiligen Bohrung (13) einen Winkel kleiner als 80° einschließt.

4. Strömungsmaschine nach Anspruch 3, **dadurch gekennzeichnet, dass** die jeweilige Bohrung (13) mit der Umfangsrichtung der Begrenzungswand (17) des Gasraums (15) im Bereich der jeweiligen Bohrung (13) einen Winkel kleiner als 80° und größer als 20°, insbesondere einen Winkel kleiner als 70° und größer als 30°, einschließt.

5. Strömungsmaschine nach einem der Ansprüche 2 bis 4, **dadurch gekennzeichnet, dass** die jeweilige Bohrung (13) in etwa tangential zu einer Begrenzungswand (18) des Rotors (11) oder einer den Gasraum (15) radial innen begrenzenden Begrenzungswand (16) der Trockengasdichtung (10) verläuft.

6. Strömungsmaschine nach Anspruch 1, **dadurch gekennzeichnet, dass** der Freiraum (24) über eine in die Führungsröhre (19) eingebrachte Bohrung (26) mit einem Innenraum (27) der Führungsröhre (19) gekoppelt ist.

7. Strömungsmaschine nach einem der Ansprüche 1 bis 6, **dadurch gekennzeichnet, dass** das gasförmige Medium über die jeweilige Führungsröhre (19) unmittelbar in einen zwischen dem Gehäuse (12) und der Trockengasdichtung (10) ausgebildeten Gasraum (15) leitbar ist.

8. Strömungsmaschine nach Anspruch 7, **dadurch gekennzeichnet, dass** die jeweilige Führungsröhre (19) bündig mit einer gehäuseseitigen Begrenzungswand (17) des Gasraums (15) abschließt.

9. Strömungsmaschine nach Anspruch 7, **dadurch gekennzeichnet, dass** die jeweilige Führungsröhre (19) gegenüber einer gehäuseseitigen Begrenzungswand (17) des Gasraums (15) in den Gasraum (15) hineinragt.

10. Strömungsmaschine nach Anspruch 9, **dadurch gekennzeichnet, dass** ein in den Gasraum (15) hineinragender Abschnitt der jeweiligen Führungsröhre (19) in Umfangrichtung umgebogen ist.

11. Strömungsmaschine nach einem der Ansprüche 8 bis 10, **dadurch gekennzeichnet, dass** ein dem Gasraum (15) zugewandter Abschnitt der jeweiligen Führungsröhre (19) eine Düse aufnimmt.

## Claims

1. A turbomachine, in particular turbocompressor, having a housing (12), with a rotor (11) mounted in the housing (12), and having a dry gas seal (10) for sealing the rotor (11) relative to the housing (12), wherein into the housing (12) at least one recess or bore (13) for a gaseous medium is introduced, via which the gaseous medium for temperature-controlling the dry gas seal (10) can be conducted in the direction of the same, wherein the gaseous medium can be directly conducted via the or each recess or bore (13) into a gas space (15) formed between the housing (12) and the dry gas seal (10),
**characterized in that** the or each recess or bore (13) receives a guide tube (19) for the gaseous medium and between the respective guide tube (19) and a wall (23) of the bore (13) receiving the guide tube (19) a free space (24) is formed which is coupled to the gas space (15) via a bore (25) introduced into the housing (12).

2. The turbomachine according to Claim 1, **characterized in that** the or each bore (13) extends at an angle deviating from 90° to the circumferential direction of a housing-side boundary wall (17) of the gas space (15) in the region of the respective bore (13).

3. The turbomachine according to Claim 2, **characterized in that** the respective bore (13) with the circumferential direction of the boundary wall (17) of the gas space (15) encloses an angle that is smaller than 80° in the region of the respective bore (13).

4. The turbomachine according to Claim 3, **characterized in that** the respective bore (13) with the circumferential direction of the boundary wall (17) of the gas space (15) includes an angle in the region of the respective bore (13) that is smaller than 80° and greater than 20°, in particular an angle that is smaller than 70° and greater than 30°.

5. The turbomachine according to any one of the Claims 2 to 4, **characterized in that** the respective bore (13) extends approximately tangentially to a boundary wall (18) of the rotor (11) or to a boundary wall (16) of the dry gas seal (10) delimiting the gas space (15) radially inside.

6. The turbomachine according to Claim 1, **characterized in that** the free space (24) is coupled via a bore (26) introduced into the guide tube (19) to an interior space (27) of the guide tube (19).

7. The turbomachine according to any one of the Claims 1 to 6, **characterized in that** the gaseous medium can be conducted via the respective guide tube (19) directly into a gas space (15) formed between the housing (12) and the dry gas seal (10).

8. The turbomachine according to Claim 7, **characterized in that** the respective guide tube (19) terminates flush with a housing-side boundary wall (17) of the gas space (15).

9. The turbomachine according to Claim 7, **characterized in that** the respective guide tube (19) projects into the gas space (15) relative to a housing-side boundary wall (17) of the gas space (15).

10. The turbomachine according to Claim 9, **characterized in that** a section of the respective guide tube (19) projecting into the gas space (15) is bent over in the circumferential direction.

11. The turbomachine according to any one of the Claims 8 to 10, **characterized in that** a section of the respective guide tube (19) facing the gas space (15) receives a nozzle.

## Revendications

1. Turbomachine, notamment turbocompresseur, comportant un logement (12), avec un rotor (11) positionné dans le logement (12) et comportant un joint à gaz sec(10) pour isoler de manière étanche le rotor (11) par rapport au logement (12), dans lequel dans le logement (12) au moins un évidement, respectivement un alésage (13) pour un milieu gazeux est ménagé, par l'intermédiaire duquel le milieu gazeux peut être guidé à des fins de thermorégulation du joint à gaz sec (10) dans la direction de ce dernier, dans laquelle le milieu gazeux peut être guidé par l'intermédiaire du ou de chaque évidement, respectivement alésage (13) directement dans une chambre de gaz (15) réalisée entre le logement (12) et le joint à gaz sec (10), **caractérisée en ce que** le ou chaque évidement, respectivement alésage (13)renferme un tuyau de guidage (19) du milieu gazeux et entre le tuyau de guidage respectif (19) et une paroi (23) de l'alésage (13) renfermant le tuyau de guidage (19 un espace libre (24) est réalisé, par l'intermédiaire duquel un alésage (25) ménagé dans le logement (12) est couplé avec la chambre de gaz (15).

2. Turbomachine selon la revendication 1, **caractérisée en ce que** le ou chaque alésage (13) s'étend sous un angle s'écartant de 90° par rapport à la direction circonférentielle d'une paroi de délimitation du côté du logement (17) de la chambre de gaz (15) au niveau de l'alésage respectif (13).

3. Turbomachine selon la revendication 2, **caractérisée en ce que** l'alésage respectif (13) définit avec la direction circonférentielle de la paroi de délimitation (17) de la chambre de gaz (15) au niveau de l'alésage respectif (13) un angle plus petit que 80°.

4. Turbomachine selon la revendication 3, **caractérisée en ce que** l'alésage respectif (13) définit avec la direction circonférentielle de la paroi de délimitation (17) de la chambre de gaz (15) au niveau de l'alésage respectif (13) un angle plus petit que 80° et plus grand que 20°, notamment un angle plus petit que 70° et plus grand que 30°.

5. Turbomachine selon une des revendications 2 à 4, **caractérisée en ce que** l'alésage respectif (13) s'étend dans une paroi de délimitation (16) du joint à gaz sec (10) délimitant radialement à l'intérieur la chambre de gaz (15) ou approximativement tangentiellement à une paroi de délimitation (18) du rotor (11).

6. Turbomachine selon la revendication 1, **caractérisée en ce que** l'espace libre (24) est couplé par l'intermédiaire d'un alésage (26) ménagé dans le tuyau de guidage (19) avec un espace intérieur (27) du tuyau de guidage (19).

7. Turbomachine selon une des revendications 1 à 6, **caractérisée en ce que** le milieu gazeux peut être guidé par l'intermédiaire du tuyau de guidage respectif (19) directement dans une chambre de gaz (15) réalisée entre le logement (12) et le joint à gaz sec (10).

8. Turbomachine selon la revendication 7, **caractérisée en ce que** le tuyau de guidage respectif (19) aboutit au ras d'une paroi de délimitation du côté du logement (17) de la chambre de gaz (15).

9. Turbomachine selon la revendication 7, **caractérisée en ce que** le tuyau de guidage respectif (19) dépasse en saillie à l'intérieur de la chambre de gaz (15) en vis-à-vis d'une paroi de délimitation du côté du logement (17) de la chambre de gaz (15).

10. Turbomachine selon la revendication 7, **caractérisée en ce que** une portion du tuyau de guidage (19) respectif dépassant en saillie à l'intérieur de la chambre de gaz (15) est recourbée dans la direction circonférentielle.

11. Turbomachine selon une des revendications 8 à 10, **caractérisée en ce que** une portion tournée vers la chambre de gaz (15) du tuyau de guidage (19) respectif renferme une buse.
